# FASCICULE DE BREVET EUROPEEN

(11) **EP 2 748 532 B1**
(45) Date de publication et mention de la délivrance du brevet: **09.08.2017**
(21) Numéro de dépôt: 12756782.4
(22) Date de dépôt: 22.08.2012
(51) Int. Cl.: F23R 3/06, F23R 3/52

(54) **PAROI ANNULAIRE DE CHAMBRE DE COMBUSTION DE TURBOMACHINE**
RINGBRENNKAMMERWAND EINER TURBOMASCHINE
ANNULAR TURBOMACHINE COMBUSTION CHAMBER WALL

(30) Priorité: 26.08.2011 FR 1157574
(43) Date de publication de la demande: 02.07.2014
(73) Titulaire: Safran Helicopter Engines, 64510 Bordes (FR)
(72) Inventeur: SAVARY, Nicolas, F-64110 Jurançon (FR); BERAT, Claude, F-64800 Igon (FR); GRIENCHE, Guy, F-64800 Coarraze (FR); BERTEAU, Patrick, F-64230 Arbus (FR); VERDIER, Hubert, Pascal, F-64800 Nay (FR)
(74) Mandataire: Calvo de Nó, Rodrigo
(86) Numéro de dépôt international: PCT/FR2012/051917
(87) Numéro de publication internationale: WO 2013/030492

(56) Documents cités:
- EP-A2- 1 811 231
- US-A1- 2009 199 563

## Description

### Arrière-plan de l'invention

La présente invention se rapporte au domaine des chambres de combustion pour turbomachines, et en particulier aux parois annulaires de chambres de combustion de turbomachines, comportant un côté froid et un côté chaud.

Par « turbomachine », on entend, dans le présent contexte, une machine permettant la conversion de l'énergie thermique d'un fluide de travail en énergie mécanique par détente dudit fluide de travail dans une turbine. Dans la description qui suit, les termes "amont" et "aval" sont définis par rapport au sens de circulation normal du fluide de travail dans la turbomachine.

En particulier, la présente invention se rapporte aux turbomachines dites à combustion interne, dans lequel le fluide de travail de la turbine inclut au moins une partie des produits d'une combustion ayant apporté cette énergie thermique au fluide de travail. Parmi des telles turbomachines, on compte notamment les turbines à gaz, les turboréacteurs, les turbopropulseurs, et les turbomoteurs. Typiquement, des telles turbomachines à combustion interne comprennent, en amont de la turbine, une chambre de combustion dans lequel un carburant est mélangé au fluide de travail, typiquement de l'air, et brûlé. Ainsi, l'énergie chimique contenue dans le carburant est convertie en énergie thermique dans la chambre de combustion, chauffant ainsi le fluide de travail dont l'énergie thermique sera ensuite convertie en énergie mécanique dans la turbine. Typiquement, une telle turbomachine comporte aussi, en amont de la chambre de combustion, un compresseur entraîné par un arbre rotatif commun à au moins un étage de la turbine pour compresser l'air avant la combustion.

Dans une telle turbomachine, la chambre de combustion comporte typiquement au moins une paroi annulaire munie de trous pour permettre à de l'air circulant du côté froid de la paroi de pénétrer du côté chaud de la paroi. Une telle paroi s'étend, dans le sens de l'écoulement du fluide de travail, entre un fond de la chambre de combustion, où sont normalement situés des injecteurs de carburant, et une sortie de gaz de combustion. La chambre de combustion est typiquement située à l'intérieur d'un carter de générateur de gaz, lequel est en communication avec le compresseur pour recevoir de l'air pressurisé dans ce dernier.

Dans une telle chambre de combustion, le débit d'air à travers ces trous joue plusieurs rôles. Dans une première zone, dite zone primaire, à proximité du fond de la chambre et donc des injecteurs, la paroi comporte au moins un trou dit primaire et servant principalement à alimenter en air la réaction de combustion avec le carburant injecté par les injecteurs. Toutefois, l'air entrant dans la chambre de combustion à travers des trous situés dans une deuxième zone plus en aval, dite zone de dilution, sert principalement à diluer les gaz de combustion, pour en diminuer ainsi la température en sortie de la chambre de combustion, et donc limiter les contraintes thermiques sur la turbine en aval de la chambre de combustion. Le document EP 1 811 231 A2 décrit une telle chambre de combustion de turbomachine ayant des parois annulaire avec trois types de trous différents pour le passage d'air à l'intérieur de la chambre de combustion. Des trous primaires alimentent la combustion avec de l'air primaire. L'air passant par des trous de dilution sert à diluer les gaz de combustion résultant de la combustion avec l'air primaire. Des trous de refroidissement permettent le passage de l'air servant à refroidir les parois.

Toutefois, afin d'augmenter l'efficience du cycle thermodynamique de la turbomachine, on a tendance à augmenter de plus en plus la température dans la chambre de combustion. Ceci pose des contraintes thermiques considérables aussi sur les parois de l'enveloppe de la chambre de combustion. Afin de refroidir ces parois, celles-ci peuvent présenter aussi un grand nombre de trous de refroidissement de petit diamètre, normalement non supérieur à 1 mm. L'air entrant dans la chambre de combustion à travers ces trous de refroidissement forme un film relativement froid du côté chaud de chaque paroi, protégeant ainsi le matériau des parois de la chaleur de combustion.

Dans la zone de dilution des chambres de combustion de l'état de la technique, on a toutefois gardé d'un côté des trous de dilution de grand diamètre, normalement supérieur à 1 mm, pour la dilution des gaz de combustion, et, d'autre part, des trous de refroidissement de petit diamètre, non supérieur à 1 mm, pour le refroidissement des parois de la chambre de combustion, la personne du métier pensant en effet que des jets d'air ne pouvant être produits que par des trous de grand diamètre seraient nécessaires pour pénétrer profondément dans l'écoulement de la chambre de combustion et ainsi obtenir en aval un bon mélange de l'air de dilution avec les gaz de combustion. Toutefois, ceci présente d'autres inconvénients. En particulier, ces jets d'air de dilution peuvent provoquer des hétérogénéités importantes dans la température à l'intérieur de la chambre de combustion. Or, pour des raisons environnementales et d'efficience de combustion, on a intérêt à avoir une distribution la plus homogène possible de la température dans la chambre de combustion. Des pics de température dans celle-ci peuvent provoquer la formation d'oxydes nitreux, tandis que du carburant peut rester sans brûler dans des zones de plus basse température.

### Objet et résumé de l'invention

La présente invention se rapporte à une paroi annulaire de chambre de combustion de turbomachine selon la revendication 1, comportant un côté froid et un côté chaud, ladite paroi étant munie d'au moins un trou primaire pour permettre à un premier débit d'air circulant du côté froid de la paroi de pénétrer du côté chaud de la paroi pour alimenter la combustion d'un carburant à l'intérieur de la chambre de combustion, et d'une pluralité de trous de refroidissement, ayant chacun un diamètre non supérieur à 1 mm, pour permettre à un deuxième débit d'air circulant du côté froid de la paroi de pénétrer du côté chaud de la paroi pour refroidir le côté chaud de la paroi.

Un objet de la présente invention est celui d'homogénéiser la distribution de température dans la chambre de combustion, tout en augmentant l'efficience du cycle thermodynamique de la turbomachine. Pour cela, selon l'invention, la pluralité de trous de refroidissement est aussi apte à assurer la dilution de gaz de combustion issus de ladite combustion par le débit d'air pénétrant du côté chaud de la paroi à travers les trous de refroidissement. Contrairement au préjugé des personnes du métier, on a constaté que l'apport d'air à travers de tels orifices de petit diamètre suffit à assurer non seulement le refroidissement des parois de la chambre de combustion, mais aussi un brassage efficace des gaz de combustion avec l'air apporté par ces orifices de petit diamètre, résultant en une dilution efficace des gaz de combustion.

En particulier, selon un deuxième aspect de l'invention, dans une telle chambre de combustion, lesdits trous de refroidissement peuvent représenter au moins 50% d'une surface globale de passage d'air à travers la paroi, et plus spécifiquement au moins 97% d'une surface globale de passage d'air à travers la paroi en aval dudit au moins un trou primaire. On peut ainsi largement se passer d'orifices de grand diamètre pour la dilution des gaz de combustion, ce qui non seulement aide à éviter les hétérogénéités dans l'écoulement dans la chambre de combustion, mais peut aussi faciliter la fabrication de la zone de dilution de la chambre de combustion.

Selon un troisième aspect, afin d'améliorer le brassage des gaz de combustion avec l'air apporté par les trous de refroidissement, chaque trou d'une pluralité desdits trous de refroidissement est orienté suivant un axe dont une projection sur la paroi présente un angle θ au moins égal à 45° par rapport à la direction d'un axe central de la paroi. En particulier, ledit angle θ pourrait être entre 85° et 95°. Ainsi, l'air injecté dans la chambre de combustion à travers les trous de refroidissement suivra un écoulement hélicoïdal, prolongeant son séjour dans la chambre de combustion et épaississant le film d'air relativement froid adjacent au côté chaud de la paroi, ce qui bénéficie non seulement au refroidissement de la paroi, mais aussi au brassage des gaz de combustion avec l'air de ce film plus épais.

Selon un quatrième aspect, aussi afin d'améliorer le brassage des gaz de combustion avec l'air introduit par les trous de refroidissement, chaque trou d'une pluralité desdits trous de refroidissement est orienté suivant un axe présentant, par rapport à la paroi, un angle β non supérieur à 45°, et de préférence non supérieur à 30°. On assure ainsi la stabilité du film d'air relativement froid adjacent au côté chaud de la paroi.

Toutefois, selon un cinquième aspect, et aussi afin de stabiliser le film d'air froid, ledit angle β est au moins égal à 15°, et de préférence au moins égal à 20°.

La présente invention se rapporte aussi à une chambre de combustion de turbomachine comportant une paroi intérieure et une paroi extérieure concentriques, ladite paroi intérieure et/ou ladite paroi extérieure étant une paroi annulaire suivant une quelconque des revendications 1 à 7. La présente invention se rapporte aussi à une turbomachine, telle qu'une turbine à gaz, turboréacteur, turbopropulseur ou turbomoteur, en particulier pour une application aéronautique, comportant une chambre de combustion avec au moins une paroi annulaire suivant l'une quelconque des revendications 1 à 7. La présente invention se rapporte aussi à un procédé de dilution des gaz de combustion dans une chambre de combustion de turbomachine, turbomachine selon la revendication 10, ladite chambre de combustion comportant au moins une paroi annulaire avec un côté froid et un côté chaud, et étant munie d'au moins un trou primaire pour permettre à un premier débit d'air circulant du côté froid de la paroi de pénétrer du côté chaud de la paroi pour alimenter la combustion d'un carburant à l'intérieur de la chambre de combustion, et d'une pluralité de trous de refroidissement, ayant chacun un diamètre non supérieur à 1 mm, pour permettre à un deuxième débit d'air circulant du côté froid de la paroi de pénétrer du côté chaud de la paroi pour refroidir le côté chaud de la paroi, dans lequel procédé le débit d'air pénétrant du côté chaud de la paroi assure aussi la dilution des qaz de combustion.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une coupe longitudinale schématique d'une turbomachine ;
- la figure 2 est une coupe longitudinale schématique d'une chambre de combustion de l'art antérieur ;
- la figure 3 est une coupe longitudinale schématique d'une chambre de combustion suivant un premier mode de réalisation de l'invention ;
- la figure 4A est une vue de détail d'une paroi de la chambre de combustion de la figure 3, en projection cylindrique ; et
- la figure 4B est une vue de détail de la même paroi, en coupe transversale suivant la ligne IVB-IVB.

### Description détaillée de l'invention

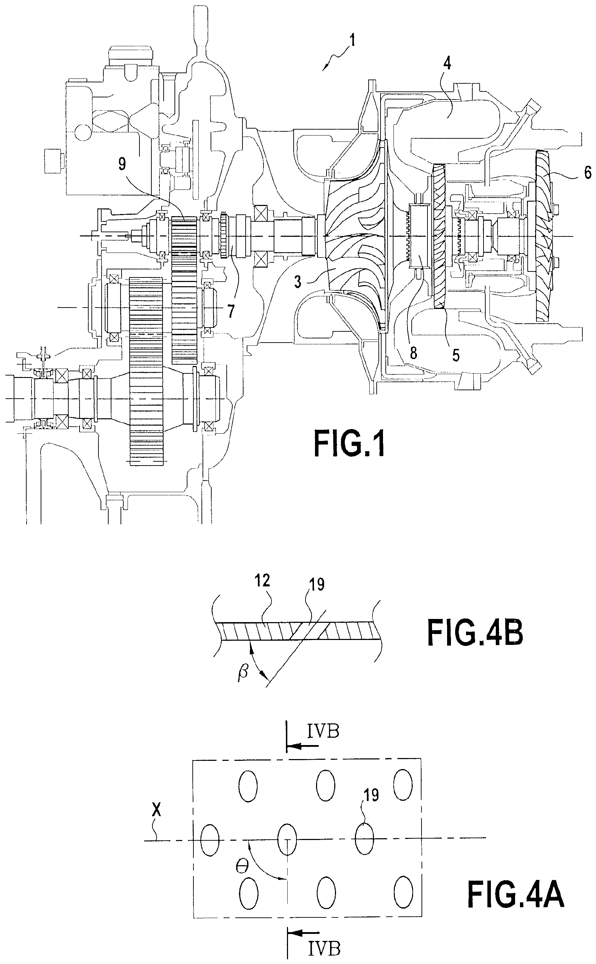

Une turbomachine, plus spécifiquement sous forme d'un turbomoteur 1, est illustrée schématiquement à titre explicatif sur la figure 1. Ce turbomoteur 1 comporte, dans le sens d'écoulement d'un fluide de travail, un compresseur centrifuge 3, une chambre de combustion annulaire 4, une première turbine axiale 5, et une deuxième turbine axiale 6. En outre, le turbomoteur 1 comprend aussi un premier arbre rotatif 7 et un deuxième arbre rotatif 8 coaxial au premier arbre rotatif 7.

Le deuxième arbre rotatif 8 relie le compresseur centrifuge 3 à la première turbine axiale 5, de manière à ce que la détente du fluide de travail dans cette première turbine axiale 5 en aval de la chambre de combustion 4 serve à actionner le compresseur 3 en amont de la chambre de combustion 4. Le premier arbre rotatif 7 relie la deuxième turbine axiale 6 à une sortie de puissance 9 positionnée en aval et/ou en amont de la machine, de telle manière que la détente subséquente du fluide de travail dans la deuxième turbine axiale 6 en aval de la première turbine axiale 5 serve à actionner la sortie de puissance 9.

Ainsi, la compression du fluide de travail dans le compresseurs centrifuge 3, suivie par un réchauffement du fluide de travail dans la chambre de combustion 4, et sa détente dans la deuxième turbine axiale 6 permettent la conversion d'une partie de l'énergie thermique introduite par la combustion dans la chambre de combustion 4 en travail mécanique extrait par la sortie de puissance 9. Dans la turbomachine illustrée, le fluide moteur est de l'air, auquel on ajoute et dans lequel on brûle un carburant dans la chambre de combustion 4, carburant tel que, par exemple, un hydrocarbure.

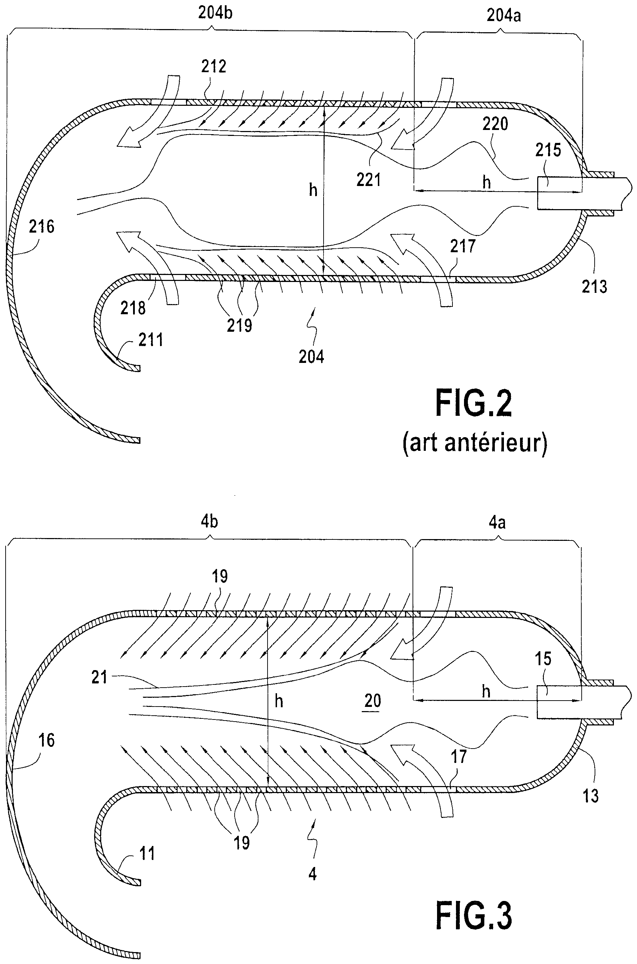

Une chambre de combustion 204 de l'art antérieur est illustrée sur la figure 2. Cette chambre de combustion 204 comporte une paroi intérieure 211 et une paroi extérieure 212, annulaires et concentriques, s'étendant d'un fond 213, dans lequel les deux parois 211 et 212 se rejoignent, jusqu'à une sortie des gaz de combustion. La chambre de combustion 204 peut être divisée en une zone primaire 204a, dans laquelle sont situés des injecteurs de carburant 215, et une zone de dilution 204b, en aval de la zone primaire 204a. Dans l'exemple illustré, la chambre de combustion 204 est du type présentant un coude 216 afin de limiter l'encombrement axial. Ce type de chambres de combustion est particulièrement courant parmi les turbomachines à compresseur centrifuges, surtout quand elles sont des turbomoteurs comme celui illustré sur la figure 1.

Les parois 211 et 212 de cette chambre de combustion 204 présentent trois types de trous différents, permettant tous les trois le passage de débits d'air du côté froid des parois 211, 212, à l'extérieur de la chambre de combustion 204, au côté chaud des parois 211, 212, à l'intérieur de la chambre des combustion 204. Un premier type de trous sont les trous dits primaires 217, situés dans la zone primaire 204a et permettant le passage d'air servant à alimenter la combustion du carburant injecté par les injecteurs 215. En aval de ces trous primaires 217, les parois 211, 212 comportent aussi un deuxième type de trous dits trous de dilution 218, permettant le passage d'air servant à diluer les gaz de combustion 220 résultant de la combustion du carburant injecté par les injecteurs 215 avec l'air entrant par les trous primaires 217. Les parois 211, 212 comportent aussi un troisième type de trous dits trous de refroidissement 219, permettant le passage d'air servant à refroidir le côté chaud de chacune des parois 211, 212. Les trois types de trous se différentient notamment par leurs tailles différentes. Ainsi, les trous primaires 217 et surtout les trous de dilution 218 présentent des diamètres sensiblement plus grands que les trous de refroidissement 219. En effet, tandis que ces derniers, distribués en grand nombre sur la surface des parois 211, 212 ont chacun un diamètre non supérieur à 1 mm, les trous de dilution 218 ont des diamètres de l'ordre de 5 mm et plus. Ainsi, quand la turbomachine est en fonctionnement, l'air pénétrant du côté chaud des parois 211, 212 à travers les trous de refroidissement 219 forme un film d'air 221 relativement froid qui reste adjacent aux parois 211, 212 afin de les protéger de la chaleur des gaz de combustion 220, l'air pénétrant à travers les trous de dilution 218 forme des jets 222 pénétrant profondément dans la chambre de combustion 204 pour se mélanger avec les gaz de combustion 220 dans la zone de dilution 204b.

Une chambre de combustion 4 suivant un mode de réalisation de l'invention est illustrée sur la Figure 3. Cette chambre de combustion 4 comporte aussi une paroi intérieure 11 et une paroi extérieure 12, annulaires et concentriques, s'étendant d'un fond 13, dans lequel les deux parois 11 et 12 se rejoignent, jusqu'à une sortie des gaz de combustion. La chambre de combustion 4 peut aussi être divisée en une zone primaire 4a, dans laquelle sont situés des injecteurs de carburant 15, et une zone de dilution 4b, en aval de la zone primaire 4a. Dans le mode de réalisation illustré, les parois intérieure et extérieure sont séparées par une distance radiale maximale h, et la profondeur de la zone primaire en direction de l'axe central X de la chambre de combustion est égale à cette distance h. Dans l'exemple illustré, la chambre de combustion 4 est aussi du type présentant un coude 16 afin de limiter son encombrement axial.

Toutefois, contrairement à la chambre de combustion 204 de l'art antérieur, cette chambre de combustion 4 ne présente que deux types de trous permettant le passage de débits d'air du côté froid des parois 11, 12, à l'extérieur de la chambre de combustion 4, au côté chaud des parois 11, 12, à l'intérieur de la chambre de combustion 4 : des trous primaires 17 et des trous de refroidissement 19. Ainsi, en aval desdits trous primaires 17, et en particulier dans la zone de dilution 4b, les parois 11, 12 ne présentent pratiquement pas de trou de passage d'air de diamètre supérieur à 1 mm. Bien que les parois 11,12 puissent présenter certains autres orifices, comme, par exemple des trous pour l'inspection endoscopique de la chambre de combustion 4, les trous de refroidissement 19 représentent au moins 50% d'une surface globale de passage d'air à travers les parois 11,12, et au moins 97% dans la zone de dilution 4b.

Dans cette chambre de combustion 4, les trous de dilution spécifiques de plus grand diamètre étant absents, la dilution des gaz de combustion 20 s'effectue de manière pratiquement exclusive par l'air pénétrant dans la chambre de combustion 4 à travers les trous de refroidissement 19, l'air du film d'air 21 adjacent aux parois 11, 12 se mélangeant effectivement aux gaz de combustion 20. Afin de faciliter ce mélange, dans le mode de réalisation illustré les trous de refroidissement 19 sont orientés de manière à impulser sur une trajectoire hélicoïdale l'air pénétrant dans la chambre de combustion 4 à travers ces trous de refroidissement 19. Ainsi, comme illustré sur les figures 4A et 4B, dans ce mode de réalisation chaque trou de refroidissement 19 est orienté suivant un axe qui présente, par rapport à la paroi 11,12, un angle β dans la plage comprise entre 20° et 30°, et dont une projection sur la paroi présente un angle θ d'approximativement 90° par rapport à la direction de l'axe central X. La chambre de combustion 4 illustrée parvient ainsi à diluer les gaz de combustion 20 de manière homogène et effective, en se passant de trous de dilution spécifiques de grand diamètre, et évitant ainsi les inconvénients liés à ceux-ci.

## Revendications

1. Paroi annulaire (11,12) de chambre de combustion (4) de turbomachine, ladite paroi (11,12) ayant un côté froid et un côté chaud et étant munie d'au moins un trou primaire (17) pour permettre à un premier débit d'air circulant du côté froid de la paroi (11,12) de pénétrer du côté chaud de la paroi (11,12) pour alimenter la combustion d'un carburant à l'intérieur de la chambre de combustion (4), et d'une pluralité de trous de refroidissement (19), ayant chacun un diamètre non supérieur à 1 mm, pour permettre à un deuxième débit d'air circulant du côté froid de la paroi (11,12) de pénétrer du côté chaud de la paroi (11,12) pour refroidir le côté chaud de la paroi (11,12), ladite pluralité de trous de refroidissement (19) étant aussi apte à assurer la dilution de gaz de combustion (20) issus de ladite combustion par le débit d'air pénétrant du côté chaud de la paroi (11,12) à travers les trous de refroidissement (19).

2. Paroi annulaire (11,12) de chambre de combustion (4) de turbomachine suivant la revendication 1, dans laquelle lesdits trous de refroidissement (19) représentent au moins 50% d'une surface globale de passage d'air à travers la paroi (11,12).

3. Paroi annulaire (11,12) de chambre de combustion (4) de turbomachine suivant l'une quelconque des revendications 1 ou 2, dans laquelle lesdits trous de refroidissement (19) représentent au moins 97% d'une surface globale de passage d'air à travers la paroi (11,12) en aval dudit au moins un trou primaire (17).

4. Paroi annulaire (11,12) de chambre de combustion (4) de turbomachine suivant l'une quelconque des revendications 1 à 3, dans laquelle chaque trou d'une pluralité desdits trous de refroidissement (19) est orienté suivant un axe dont une projection sur la paroi (11,12) présente un angle θ au moins égal à 45° par rapport à la direction d'un axe central (X) de la paroi (11,12).

5. Paroi annulaire (11,12) de chambre de combustion (4) de turbomachine suivant la revendication 4, dans laquelle ledit angle θ est entre 85° et 95°.

6. Paroi annulaire (11,12) de chambre de combustion (4) de turbomachine suivant l'une quelconque des revendications précédentes, dans laquelle chaque trou d'une pluralité desdits trous de refroidissement (19) est orienté suivant un axe présentant, par rapport à la paroi (11,12), un angle β non supérieur à 45°, et de préférence non supérieur à 30°.

7. Paroi annulaire (11,12) de chambre de combustion (4) de turbomachine suivant la revendication 6, dans laquelle ledit angle β est au moins égal à 15°, et de préférence au moins égal à 20°.

8. Chambre de combustion (4) de turbomachine comportant une paroi intérieure (11) et une paroi extérieure (12) concentriques, ladite paroi intérieure (11) et/ou ladite paroi extérieure (12) étant une paroi annulaire suivant une quelconque des revendications 1 à 7.

9. Turbomachine (1) comportant une chambre de combustion (4) avec au moins une paroi annulaire (11,12) suivant l'une quelconque des revendications 1 à 7.

10. Procédé de dilution des gaz de combustion (20) dans une chambre de combustion (4) de turbomachine, ladite chambre de combustion (4) comportant au moins une paroi annulaire (11,12) avec un côté froid et un côté chaud, et étant munie d'au moins un trou primaire (17) pour permettre à un premier débit d'air circulant du côté froid de la paroi de pénétrer du côté chaud de la paroi (11,12) pour alimenter la combustion d'un carburant à l'intérieur de la chambre de combustion (4), et d'une pluralité de trous de refroidissement (19), ayant chacun un diamètre non supérieur à 1 mm, pour permettre à un deuxième débit d'air circulant du côté froid de la paroi (11,12) de pénétrer du côté chaud de la paroi (11,12) pour refroidir le côté chaud de la paroi (11,12), dans lequel procédé le débit d'air pénétrant du côté chaud de la paroi (11,12) assure aussi la dilution des gaz de combustion (20).

## Patentansprüche

1. Ringförmige Wand (11, 12) einer Brennkammer (4) einer Turbomaschine, wobei die Wand (11, 12) eine kalte Seite und eine heiße Seite aufweist und mit wenigstens einem Primärloch (17) versehen ist, um einer ersten Menge von auf der kalten Seite der Wand (11, 12) zirkulierender Luft zu ermöglichen, auf die heiße Seite der Wand (11, 12) zu dringen, um die Verbrennung eines Treibstoffs innerhalb der Brennkammer (4) in Gang zu halten, sowie mit einer Vielzahl von Kühllöchern (19) versehen ist, die jeweils einen Durchmesser von nicht mehr als 1 mm aufweisen, um einer zweiten Menge von auf der kalten Seite der Wand (11, 12) zirkulierender Luft zu ermöglichen, auf die heiße Seite der Wand (11, 12) zu dringen, um die heiße Seite der Wand (11, 12) zu kühlen, wobei die Vielzahl von Kühllöchern (19) auch geeignet ist, die Verdünnung von aus der Verbrennung stammenden Verbrennungsgasen (20) durch die Luftmenge, welche durch die Kühllöcher (19) auf die heiße Seite der Wand (11, 12) dringt, sicherzustellen.

2. Ringförmige Wand (11, 12) einer Brennkammer (4) einer Turbomaschine nach Anspruch 1, bei der die Kühllöcher (19) wenigstens 50 % einer Gesamtfläche des Luftdurchgangs durch die Wand (11, 12) ausmachen.

3. Ringförmige Wand (11, 12) einer Brennkammer (4) einer Turbomaschine nach einem der Ansprüche 1 oder 2, bei der die Kühllöcher (19) wenigstens 97 % einer Gesamtfläche des Luftdurchgangs durch die Wand (11, 12) stromab des wenigstens einen Primärlochs (17) ausmachen.

4. Ringförmige Wand (11,12) einer Brennkammer (4) einer Turbomaschine nach einem der Ansprüche 1 bis 3, bei der jedes Loch einer Vielzahl der Kühllöcher (19) entlang einer Achse ausgerichtet ist, von der eine Projektion auf die Wand (11, 12) einen Winkel θ wenigstens gleich 45° in Bezug auf die Richtung einer Mittelachse (X) der Wand (11, 12) aufweist.

5. Ringförmige Wand (11, 12) einer Brennkammer (4) einer Turbomaschine nach Anspruch 4, bei der der Winkel θ zwischen 85° und 95° beträgt.

6. Ringförmige Wand (11, 12) einer Brennkammer (4) einer Turbomaschine nach einem der vorhergehenden Ansprüche, bei der jedes Loch einer Vielzahl der Kühllöcher (19) entlang einer Achse ausgerichtet ist, die in Bezug auf die Wand (11, 12) einen Winkel β von nicht mehr als 45° und vorzugsweise von nicht mehr als 30° aufweist.

7. Ringförmige Wand (11, 12) einer Brennkammer (4) einer Turbomaschine nach Anspruch 6, bei der der Winkel β wenigstens gleich 15° und vorzugsweise wenigstens gleich 20° beträgt.

8. Brennkammer (4) einer Turbomaschine mit einer Innenwand (11) und einer Außenwand (12), die konzentrisch sind, wobei die Innenwand (11) und/oder die Außenwand (12) eine ringförmige Wand nach einem der Ansprüche 1 bis 7 ist/sind.

9. Turbomaschine (1), die eine Brennkammer (4) mit wenigstens einer ringförmigen Wand (11, 12) nach einem der Ansprüche 1 bis 7 umfasst.

10. Verfahren zur Verdünnung der Verbrennungsgase (20) in einer Brennkammer (4) einer Turbomaschine, wobei die Brennkammer (4) wenigstens eine ringförmige Wand (11, 12) mit einer kalten Seite und einer heißen Seite umfasst und mit wenigstens einem Primärloch (17) versehen ist, um einer ersten Menge von auf der kalten Seite der Wand zirkulierender Luft zu ermöglichen, auf die heiße Seite der Wand (11, 12) zu dringen, um die Verbrennung eines Treibstoffs innerhalb der Brennkammer (4) in Gang zu halten, sowie mit einer Vielzahl von Kühllöchern (19) versehen ist, die jeweils einen Durchmesser von nicht mehr als 1 mm aufweisen, um einer zweiten Menge von auf der kalten Seite der Wand (11, 12) zirkulierender Luft zu ermöglichen, auf die heiße Seite der Wand (11, 12) zu dringen, um die heiße Seite der Wand (11, 12) zu kühlen, bei welchem Verfahren die auf die heiße Seite der Wand (11, 12) dringende Luftmenge auch die Verdünnung der Verbrennungsgase (20) sicherstellt.

## Claims

1. An annular wall (11, 12) of a combustion chamber (4) of a turbomachine, said wall (11, 12) having a cold side and a hot side and being provided with at least one primary hole (17) for enabling a first flow of air flowing on the cold side of the wall (11, 12) to penetrate to the hot side of the wall (11, 12) to feed the combustion of fuel inside the combustion chamber (4), and a plurality of cooling holes (19), each having a diameter no greater than 1 mm in order to enable a second flow of air flowing on the cold side of the wall (11, 12) to penetrate to the hot side of the wall (11, 12) to cool the hot side of the wall (11, 12), said plurality of cooling holes (19) being also suitable for diluting the combustion gas (20) resulting from said combustion by using the flow of air penetrating to the hot side of the wall (11, 12) through the cooling holes (19).

2. An annular wall (11, 12) of a combustion chamber (4) of a turbomachine according to claim 1, wherein said cooling holes (19) present not less than 50% of a total surface area for passing air through the wall (11, 12).

3. An annular wall (11, 12) of a combustion chamber (4) of a turbomachine according to claim 1 or claim 2, wherein said cooling holes (19) represent at least 97% of a total surface area for passing air through the wall (11, 12) downstream from said at least one primary hole (17).

4. An annular wall (11, 12) of a combustion chamber (4) of a turbomachine according to any one of claims 1 to 3, wherein each hole of a plurality of said cooling holes (19) is oriented along an axis that in projection on the wall (11, 12) presents an angle θ of not less than 45° relative to the direction of a central axis (X) of the wall (11, 12).

5. An annular wall (11, 12) of a combustion chamber (4) of a turbomachine according to claim 4, wherein said angle θ lies in the range 85° to 95°.

6. An annular wall (11, 12) of a combustion chamber (4) of a turbomachine according to any preceding claim, wherein each hole of a plurality of said cooling holes (19) is oriented along an axis presenting an angle β relative to the wall (11, 12), the angle β being no greater than 45°, and preferably no greater than 30°.

7. An annular wall (11, 12) of a combustion chamber (4) of a turbomachine according to claim 6, wherein said angle β is not less than 15°, and preferably not less than 20°.

8. A combustion chamber (4) for a turbomachine comprising an inner wall (11) and an outer wall (12) that are coaxial, said inner wall (11) and/or said outer wall (12) being an annular wall according to any one of claims 1 to 7.

9. A turbomachine (1) including a combustion chamber (4) having at least one annular wall (11, 12) according to any one of claims 1 to 7.

10. A method of diluting combustion gas (20) in a combustion chamber (4) of a turbomachine, said combustion chamber (4) having at least one annular wall (11, 12) with a cold side and a hot side, and being provided with at least one primary hole (17) for enabling a first flow of air flowing on the cold side of the wall (11, 12) to penetrate to the hot side of the wall (11, 12) to feed the combustion of fuel inside the combustion chamber (4), and a plurality of cooling holes (19), each having a diameter no greater than 1 mm in order to enable a second flow of air flowing on the cold side of the wall (11, 12) to penetrate to the hot side of the wall (11, 12) to cool the hot side of the wall (11, 12), wherein the flow of air penetrating to the hot side of the wall (11, 12) also serves to dilute the combustion gas (20).
